# EUROPÄISCHE PATENTANMELDUNG

(11) **EP 4 234 132 A2**
(43) Veröffentlichungstag der Anmeldung: **30.08.2023**
(21) Anmeldenummer: 23175732.9
(22) Anmeldetag: 11.12.2015
(51) Int. Cl.: B22F 7/02

(54) **VERFAHREN ZUM SCHICHTWEISEN AUFBAU VON FORMEN UND KERNEN MIT EINEM WASSERGLASHALTIGEN BINDEMITTEL UND EIN WASSERGLASHALTIGES BINDEMITTEL**

(30) Priorität: 12.12.2014 DE 102014118577
(62) Teilanmeldung aus: 15830761.1
(71) Anmelder: ASK Chemicals GmbH, 40721 Hilden (DE)
(72) Erfinder: DETERS, Heinz, 40470 Düsseldorf (DE); ZUPAN, Henning, 42289 Wuppertal (DE)
(74) Vertreter: Müller Schupfner & Partner Patent- und Rechtsanwaltspartnerschaft mbB

(57) **Zusammenfassung**

Gegenstand der Erfindung ist ein Bindemittel enthaltend Wasserglas und weiterhin ein Phosphat oder ein Borat oder beides. Ebenfalls Gegenstand der Erfindung ist ein Verfahren zum schichtweisen Aufbau von Formen und Kernen umfassend eine Baustoffmischung zumindest aus feuerfestem Formgrundstoff und das Bindemittel. Zur schichtweisen Herstellung der Formen und Kernen im 3-D-Druck wird der feuerfeste Formgrundstoff schichtweise aufgebracht und jeweils mithilfe des Bindemittels schichtweise selektiv bedruckt, sodass ein Körper entsprechend der Formen oder Kerne aufgebaut wird und die Formen oder Kerne nach Entfernen der ungebundenen Baustoffmischung freigesetzt werden.

## Beschreibung

Die Erfindung betrifft ein Verfahren zum schichtweisen Aufbau von Formen und Kernen umfassend feuerfesten Formgrundstoff und ein Bindemittel enthaltend zumindest eine wässrige Alkalisilikat-Lösung und weiterhin ein Phosphat oder ein Borat oder beides. Zur schichtweisen Herstellung im 3-D-Druck von Formen und Kernen ist es nötig, einen feuerfesten Formgrundstoff schichtweise aufzutragen und jeweils mithilfe des Bindemittels selektiv zu bedrucken. Weiterhin betrifft die Erfindung so hergestellte Formen oder Kerne.

### Stand der Technik

Gießformen setzen sich im Wesentlichen aus Kernen und Formen zusammen, welche die Negativformen des herzustellenden Gussstücks darstellen. Diese Kerne und Formen bestehen dabei aus einem feuerfesten Material, beispielsweise Quarzsand, und einem geeigneten Bindemittel, das der Gießform nach der Entnahme aus dem Formwerkzeug eine ausreichende mechanische Festigkeit verleiht. Für die Herstellung von Gießformen verwendet man also einen feuerfesten Formgrundstoff, welcher mit einem geeigneten Bindemittel umhüllt ist. Der feuerfeste Formgrundstoff liegt bevorzugt in einer rieselfähigen Form vor, so dass er in eine geeignete Hohlform eingefüllt werden kann. Durch das Bindemittel wird ein fester Zusammenhalt zwischen den Partikeln/Körnern des Formgrundstoffs erzeugt, so dass die Gießform die erforderliche mechanische Stabilität erhält.

Gießformen müssen verschiedene Anforderungen erfüllen. Beim Gießvorgang selbst müssen sie zunächst eine ausreichende Festigkeit und Temperaturbeständigkeit aufweisen, um das flüssige Metall in den aus einem oder mehreren Gieß(teil)formen gebildeten Hohlraum aufnehmen zu können. Nach Beginn des Erstarrungsvorgangs wird die mechanische Stabilität des Gussstücks durch eine erstarrte Metallschicht gewährleistet, die sich entlang der Wände der Gießform ausbildet. Das Material der Gießform muss sich nun unter dem Einfluss der vom Metall abgegebenen Hitze in der Weise zersetzen, dass es seine mechanische Festigkeit verliert, also der Zusammenhalt zwischen einzelnen Partikeln/Körnern des feuerfesten Materials aufgehoben wird. Im Idealfall zerfällt die Gießform wieder zu einem feinen Sand, der sich mühelos vom Gussstück entfernen lässt.

Unter der Bezeichnung "Rapid Prototyping" sind verschiedene Methoden zur Herstellung dreidimensionaler Körper durch schichtweisen Aufbau bekannt. Ein Vorteil dieser Verfahren ist die Möglichkeit, auch komplexe, aus einem Stück bestehende Körper mit Hinterschneidungen und Hohlräumen herzustellen. Mit konventionellen Methoden müssten diese Körper aus mehreren, einzeln gefertigten Teilen zusammengefügt werden. Ein weiterer Vorteil besteht darin, dass die Verfahren in der Lage sind, die Körper ohne Formwerkzeuge direkt aus den CAD-Daten herzustellen.

Es ergeben sich durch die 3-dimensionalen Druckverfahren neue Anforderungen an Bindemittel, die die Gießform zusammenhalten, wenn das Bindemittel oder eine Bindemittel-Komponente durch die Düsen eines Druckkopfes appliziert werden soll. Dann müssen die Bindemittel nicht nur zu einem ausreichenden Festigkeitsniveau und zu guten Zerfallseigenschaften nach dem Metallguss führen sowie eine ausreichende Thermo- und Lagerstabilität aufweisen, sondern nun auch "verdruckbar" sein, d.h. die Düsen des Druckkopfes dürfen sich einerseits nicht durch das Bindemittel festsetzen, andererseits sollte das Bindemittel auch nicht direkt aus dem Druckkopf herausfließen können, sondern Einzeltröpfchen bilden.

Ferner wird darüber hinaus immer häufiger gefordert, dass während der Herstellung der Gießformen sowie während des Gießens und Abkühlens möglichst keine Emissionen in Form von CO₂ oder Kohlenwasserstoffen entstehen, um die Umwelt zu schonen und die Geruchsbelästigung der Umgebung durch Kohlenwasserstoffe, hauptsächlich durch aromatische Kohlenwasserstoffe, einzuschränken. Um diesen Anforderungen zu genügen, wurden in den vergangenen Jahren anorganische Bindesysteme entwickelt bzw. weiterentwickelt, deren Verwendung dazu führt, dass Emissionen von CO₂ und Kohlenwasserstoffen bei der Herstellung von Metallformen vermieden oder zumindest deutlich minimiert werden können.

Die EP 1802409 B1 offenbart ein anorganisches Bindemittelsystem, mit welchem es möglich ist, Gießformen mit ausreichender Stabilität herzustellen. Das Bindemittelsystem eignet sich allerdings insbesondere für die thermische Aushärtung in einer Kernschießmaschine, in welcher eine vorher gemischte Formstoffmischung (Mischung aus Feuerfestmaterial und Bindemittel) mittels Druck in das beheizte Formwerkzeug befördert wird.

Die WO 2012/175072 A1 offenbart ein Verfahren zum schichtweisen Aufbau von Modellen, bei welchem ein anorganisches Bindemittelsystem zum Einsatz kommt. Das schichtweise aufgetragene, partikelförmige Material umfasst dabei ein partikelförmiges Baumaterial und eine sprühgetrocknete Alkalisilikatlösung. Die selektive Aktivierung der Härtung erfolgt mithilfe einer Wasser umfassenden Lösung, die über den Druckkopf hinzugegeben wird. Offenbart werden hierbei sowohl reines Wasser als auch modifiziertes Wasser, das rheologische Additive enthält. Als rheologische Additive werden Andicker wie Glycerin, Glycol oder Schichtsilikate beispielhaft erwähnt, wobei insbesondere die Schichtsilikate hervorgehoben werden. Die WO 2012/175072 A1 offenbart nicht, wässrige Alkalisilikat-Lösungen einzusetzen. Das Bindemittel bzw. die Wasserglaslösung wird nicht über den Drucckopf dosiert, sondern ist bereits in dem schichtweise aufgetragenen, partikelförmigen Material enthalten. Das selektive Benetzen bzw. Abbinden eines schichtweise aufgetragenen Materials mithilfe eines Bindemittels gelingt gemäß der WO 2012/175072 A1 folglich nur über einen Umweg und nicht direkt mithilfe einer wässrigen Alkalisilikat-Lösung. Durch den in der WO 2012/175072 A1 beschriebenen Prozess befindet sich das Bindemittel, die spühgetrocknete Alkalisilikatlösung, nicht nur an dem vorgesehenen Bestimmungsort, sondern auch in Bereichen, in denen es nicht erforderlich ist. Somit wird das Bindemittel in unnötiger Weise verbraucht.

Die DE 102011053205 A1 offenbart ein Verfahren zum Herstellen eines Bauteils in Ablagerungstechnik, bei welchem u. a. Wasserglas neben vielen anderen Möglichkeiten als Druckflüssigkeit verwendet wird. Das Wasserglas kann demnach mittels eines Druckkopfes dosiert und auf einen vorbestimmten Teilbereich der jeweils obersten Schicht aufgetragen werden. Es finden sich in der DE 102011053205 A1 allerdings keine Informationen darüber, welche Wasserglaszusammensetzungen eingesetzt werden können. Auch erhält der Fachmann keine Hinweise über die physikalischen Eigenschaften der eingesetzten Wassergläser, die auf eine chemische Zusammensetzung hätten schließen lassen können. Lediglich im beschriebenen Stand der Technik ist ganz allgemein von anorganischen Bindemitteln (wie z.B. fließfähiges Wasserglas) die Rede, die in der Regel große Mengen an Feuchtigkeit enthalten - als Beispiel wird lediglich bis zu 60 Gew.% Wasser angegeben. Die großen Wassermengen (z.B. bis zu 60 Gew.% Wasser) werden als nachteilig beurteilt, da diese schwer zu handhaben seien.

Der Fachmann erhält durch die DE 102011053205 A1 keine Informationen darüber, welche Wasserglaszusammensetzungen sich für das 3-D Drucken eignen.

Die WO 2013/017134 A1 offenbart eine wässrige Alkalisilikatlösung mit einer Viskosität bei 20°C von 45 mPas oder weniger, die einen Feststoffanteil in Bezug auf das Alkalisilikat von 39 Gew.% aufweist. Das Verhältnis zwischen SiO₂ und M₂O (M₂O ist Na₂O und/oder K₂O) wird als Gewichtsverhältnis angegeben. Die engsten Grenzen dieses Gewichtsverhältnisses liegen zwischen 1,58 und 3,30. In den Beispielen der WO2013/017134 A1 wird ein Verfahren offenbart, mit welchem es möglich scheint, die Viskosität von Wasserglasbindemitteln mithilfe einer Kugelmühle zu erniedrigen. Ein solches Verfahren ist allerdings sehr aufwendig und kostenintensiv.

### Aufgabe der Erfindung

Die Erfinder haben sich daher die Aufgabe gestellt, ein Wasserglasbindemittel bzw. eine wässrige Alkalisilikat-Lösung zu entwickeln, die für das 3-dimensionale Drucken von Gießformen geeignet ist, d. h. das Wasserglasbindemittel kann direkt über einen Druckkopf selektiv dosiert werden, ohne die Düsen bzw. das Modul des Druckkopfes festzusetzen bzw. zu verkleben. Weiterhin sollte das Bindemittel möglichst fein, punktförmig und in genau definierter Dosis aufgetragen werden können. Überdies führt die Verwendung des erfindungsgemäßen Wasserglases zu positiven Eigenschaften der damit hergestellten Gießformen.

### Zusammenfassung der Erfindung

Diese Aufgabe wird mit einem Bindemittel mit den Merkmalen der unabhängigen Ansprüche gelöst. Vorteilhafte Weiterentwicklungen des erfindungsgemäßen Verfahrens sind Gegenstand der abhängigen Patentansprüche oder nachfolgend beschrieben. Das Verfahren zum schichtweisen Aufbau von Körpern umfasst dabei zumindest die folgenden Schritte:
a) Bereitstellen eines feuerfesten Formgrundstoffs als Bestandteil einer Baustoffmischung;
b) Ausbreiten einer dünnen Schicht der Baustoffmischung mit einer Schichtdicke von 0,05 mm bis 3 mm, bevorzugt 0,1 mm bis 2 mm und besonders bevorzugt 0,1 mm bis 1 mm der Baustoffmischung;
c) Bedrucken ausgewählter Bereiche der dünnen Schicht mit einem Bindemittel umfassend
   - Wasserglas in Form einer wässrigen Alkalisilikat-Lösung und
   - zumindest ein Phosphat oder zumindest ein Borat oder Phosphat und Borat, vorzugsweise jeweils in gelöster Form in einer zumindest teilweise, insbesondere vollständig wässrigen, Lösung; und
d) mehrfaches Wiederholen der Schritte b) und c).

Bei Verwendung des erfindungsgemäßen Wasserglasbindemittels haben die damit hergestellten Gießformen die folgenden Eigenschaften:
1. Gute Festigkeiten, insbesondere nach thermischer Härtung
2. Ausreichende Thermostabilität, insbesondere geeignet für den Metallguss, um eine Deformation der Gießform während des Gießprozesses zu verhindern.
3. Gute Lagerstabilität
4. Gute Zerfallseigenschaften nach dem Metallguss
5. Keine Emissionen von CO₂ oder anderen organischen Pyrolyseprodukten während des Gießvorgangs und Abkühlens, sofern sich keine organischen Additive in dem schichtweise aufgetragen, partikelförmigen Material oder in dem Wasserglasbindemittel befinden.

Überraschend wurde gefunden, dass das erfindungsgemäße Bindemittel sehr gut "verdruckbar" ist, d.h. die Düsen des Druckkopfes setzen sich durch das Bindemittel nicht schnell fest. Gleichzeitig kann das Bindemittel sehr fein aufgetragen werden. Eine Verstopfung der Düsen des Druckkopfes würde zu einem schlechten Druckergebnis führen. Dies wird durch das erfindungsgemäße Bindemittel vermieden.

Eine schnelle Verstopfung der Düsen bzw. eine schnelle Filmbildung an dem Modul des Druckkopfes ist auf eine erhöhte Reaktivität des Bindemittels zurückzuführen. Die Reaktivität des Bindemittels kann über dessen chemische Zusammensetzung gesteuert werden- ebenso wie die thermische Stabilität des Bindemittels. Mit Blick auf die Anwendung im Bereich des 3-D Druckverfahrens ist auf der einen Seite eine geringe Reaktivität des Bindemittels gefordert, um eine Beeinträchtigung des Druckkopfes zu vermeiden und die Aushärtung des Bindemittels gezielt steuern zu können, aber auf der anderen Seite ist auch eine hohe thermische Stabilität gewünscht,
um zu verhindern, dass sich die hergestellten Gießformen während des Gießvorgangs verformen und so zu einer schlechten Maßhaltigkeit des Gussstücks führen. Die Thermostabilität und die Reaktivität des Bindemittels hängen in gleicher Weise von der chemischen Zusammensetzung des Bindemittels ab, d.h. je höher die Reaktivität, desto höher die thermische Stabilität. Gegenstand dieser Erfindung ist es, eine geeignete Bindemittelzusammensetzung zu offenbaren, die eine ausreichend hohe Thermostabilität der Gießformen bei ausreichend geringer Reaktivität des Bindemittels gewährleistet.

### Detaillierte Beschreibung der Erfindung

Das erfindungsgemäße Bindemittel ist für das 3-dimensionale Drucken von Gießformen vorgesehen. Das Bindemittel dient als Druckflüssigkeit, mit welcher ein schichtweise aufgetragenes Material wie beispielsweise ein feuerfester Formgrundstoff (z.B. Quarzsand) und ggfs. ein oder mehrere Additive, zusammen als Baustoffmischung bezeichnet, selektiv bedruckt wird. Die Baustoffmischung enthält das Bindemittel noch nicht. Üblicherweise folgt nach dem schichtweisen Auftrag der Baustoffmischung ein selektiver Druckvorgang - dieser Vorgang wiederholt sich solange bis der gesamte Druckvorgang abgeschlossen ist und die Gießform erhalten werden kann.

Die Härtung des Bindemittels kann auf üblichen Wegen erfolgen. So ist es einerseits möglich, der schichtweise aufgetragenen Baustoffmischung ein oder mehrere Wasserglashärter zuzusetzen, welche die unmittelbare Aushärtung des aufgedruckten wasserglashaltigen Bindemittels auf chemischem Wege erwirken.

Auch ist es möglich, das aufgetragene Wasserglas mithilfe von sauren Gasen wie CO₂ auszuhärten - allerdings ist diese Variante weniger bevorzugt.

Auf der anderen Seite kann auch eine thermische Härtung erfolgen. Es ist beispielsweise möglich, dass nach Abschluss eines Druckvorgangs (unmittelbar bevor, während oder nachdem die nächste Schicht der Baustoffmischung aufgetragen wird) eine thermische Härtung erfolgt, indem die Mischung aus Baustoffmischung und Bindemittel beispielsweise mithilfe eines Infrarotlichts bestrahlt wird. In dieser schichtweisen Härtung kann das Infrarotlicht z.B. in Form eines Spots dem Drucckopf nachgeführt werden.

Es ist natürlich auch möglich, diese Art der thermischen Härtung erst nach mehreren aufgetragenen Schichten etappenweise durchzuführen. Auch ist es möglich, die thermische Härtung erst nach Beendigung des letzten Druckvorgangs vorzunehmen - die Schritte "Auftragen einer Schicht der Baustoffmischung" und anschließender "Druckvorgang" wechseln sich so lange ab, bis die letzte Schicht bedruckt wurde, die nötig ist, um die Gießform vollständig herzustellen. Die aufgetragenen und teilweise bedruckten Schichten verweilen hierfür z.B. in einer sogenannten "Jobbox", die anschließend z.B. in einem Mikrowellenofen überführt werden kann, um die thermische Härtung durchzuführen.

Die thermische Aushärtung wird bevorzugt, insbesondere die Trocknung durch Mikrowellen und vorzugsweise nach Beendigung des gesamten Druckvorgangs im Mikrowellenofen.

Als feuerfester Formgrundstoff können für die Herstellung von Gießformen übliche und bekannte Materialien verwendet werden. Geeignet sind beispielsweise Quarz-, Zirkon- oder Chromerzsand, Olivin, Vermiculit, Bauxit, Schamotte sowie künstliche Formgrundstoffe, insbesondere mehr als 50 Gew.% Quarzsand bezogen auf den feuerfesten Formgrundstoff. Um Kosten gering zu halten, beträgt der Anteil an Quarzsand am feuerfesten Formgrundstoff größer als 70 Gew.%, bevorzugt größer als 80 Gew.% und insbesondere bevorzugt größer als 90 Gew.%. Dabei ist es nicht notwendig, ausschließlich Neusande einzusetzen. Im Sinne einer Ressourcenschonung und zur Vermeidung von Deponiekosten ist es sogar vorteilhaft, einen möglichst hohen Anteil an regeneriertem Altsand zu verwenden, wie er aus gebrauchten Formen durch Recyceln erhältlich ist.

Unter einem feuerfesten Formgrundstoff werden Stoffe verstanden, die einen hohen Schmelzpunkt (Schmelztemperatur) aufweisen. Vorzugsweise ist der Schmelzpunkt des feuerfesten Formgrundstoffs größer als 600°C, bevorzugt größer als 900°C, besonders bevorzugt größer als 1200°C und insbesondere bevorzugt größer als 1500°C.

Der feuerfeste Formgrundstoff macht vorzugsweise größer 80 Gew.%, insbesondere größer 90 Gew.%, besonders bevorzugt größer 95 Gew.%, der Baustoffmischung aus.

Ein geeigneter feuerfester Formgrundstoff wird z.B. in der WO 2008/101668 A1 (= US 2010/173767 A1) beschrieben. Gleichfalls geeignet sind Regenerate einsetzbar, die durch Waschen und anschließende Trocknung zerkleinerter gebrauchter Formen erhältlich sind. In der Regel können die Regenerate mindestens ca. 70 Gew.% des feuerfesten Formgrundstoffs ausmachen, bevorzugt mindestens ca. 80 Gew.% und besonders bevorzugt größer 90 Gew.%.

Nach einer Ausführungsform der Erfindung ist es vorteilhaft, Regenerate einzusetzen, die durch rein mechanische Behandlung gewonnen wurden. Unter einer mechanischen Behandlung wird verstanden, dass zumindest ein Teil des im Altsand verbliebenen Bindemittels durch ein Schleif- oder Prallprinzip vom Sandkorn entfernt wird. Diese Regenerate können je nach Bedarf eingesetzt werden. Der Anteil dieser Regenerate kann beispielsweise größer 5 Gew.%, bevorzugt größer 20 Gew.%, weiter bevorzugt größer 50 Gew.%, besonders bevorzugt größer 70 Gew.% und insbesondere bevorzugt größer 80 Gew.% des feuerfesten Formgrundstoffs ausmachen. Solche Regenerate werden beispielsweise eingesetzt, um eine (Vor- bzw. Teil-)Härtung des aufgetragenen Bindemittels zu erwirken.

Nach einer Ausführungsform der Erfindung ist es vorteilhaft, Salze als Formgrundstoff einzusetzen. Unter Salzen werden Alkali- und Erdalkalihalogenide verstanden. Bevorzugt werden dabei die Alkalihalogenide, von denen die Alkalichloride weiter bevorzugt werden. Insbesondere bevorzugt wird Natriumchlorid eingesetzt. Der Anteil der Salze bzw. des Salzes kann beispielsweise größer 5 Gew.%, bevorzugt größer 20 Gew.%, weiter bevorzugt größer 50 Gew.%, weiter bevorzugt größer 80 Gew.% des feuerfesten Formgrundstoffs ausmachen. Insbesondere bevorzugt wird in dieser Ausführungsform nur das Salz als feuerfester Formgrundstoff eingesetzt. Salze werden beispielsweise dann eingesetzt, wenn die Gießform nach dem Metallguss mithilfe von Wasser entfernt werden soll.

Der mittlere Körnungsdurchmesser des feuerfesten Formgrundstoffs liegt in der Regel zwischen 50 µm und 600 µm, vorzugsweise zwischen 70 µm und 400 µm, bevorzugt zwischen 80 µm und 300 µm und besonders bevorzugt zwischen 100 µm und 200 µm. Der Körnungsdurchmesser lässt sich z.B. durch Siebung nach DIN ISO 3310 bestimmen. Besonders bevorzugt sind Teilchenformen/Körnungen mit größter Längenausdehnung zu kleinster Längenausdehnung (rechtwinkelig zueinander und jeweils für alle Raumrichtungen) von 1:1 bis 1:5 oder 1:1 bis 1 : 3, d.h. solche die z.B. nicht faserförmig sind.

Der feuerfeste Formgrundstoff weist einen rieselfähigen Zustand auf.

Das erfindungsgemäße Bindemittel enthält Wassergläser, die beispielsweise durch Lösen von glasartigen Lithium-, Natrium- und/oder Kaliumsilikaten in Wasser hergestellt werden. Bevorzugt werden Wassergläser, die zumindest Natriumsilikate enthalten.

Vorzugsweise ist das Verhältnis Na₂O / M₂O im Bindemittel größer als 0,4, bevorzugt größer als 0,5 und weiter bevorzugt größer als 0,6 und insbesondere bevorzugt größer als 0,7, wobei M₂O für die Summe der Stoffmengen von Lithium-, Natrium- und Kalium berechnet als Oxid in dem Bindemittel steht.

Die Stoffmengen der Alkalimetalle, berechnet als Oxide M₂O, berechnet sich nach der vorliegenden Erfindung ausschließlich aus dem im Bindemittel enthaltenen molaren Mengen an amorphen Alkalisilikaten, Alkalioxiden, Alkalihydroxiden, Alkaliphosphaten und Alkaliboraten. Das bedeutet, dass etwaige Zusätze wie Alkalichlorid oder Alkalicarbonate zur Wasserglaslösung nicht in die Berechnung von M₂O eingehen (M₂O jeweils in der Bedeutung gemäß vorherigem Absatz.)

Das Wasserglas weist ein molares Modul SiO₂/M₂O von größer 1,4, vorzugsweise größer 1,6, bevorzugt größer 1,8, weiter bevorzugt größer 1,9 und insbesondere bevorzugt größer 2,0 auf. Das Wasserglas weist vorzugsweise ein molares Modul SiO₂/M₂O von kleiner 2,8, vorzugsweise kleiner 2,6, bevorzugt kleiner 2,5, insbesondere bevorzugt kleiner 2,4 auf. Es ist in diesem Zusammenhang für den Fachmann überraschend, dass derart niedrige molare SiO₂/M₂O - Verhältnisse der erfindungsgemäßen Wasserglaslösungen zu einer ausreichend hohen Thermostabilität der Gießform, insbesondere im Metallguss, führt.

Das Bindemittel weist einen Feststoffanteil von kleiner 40 Gew.%, vorzugsweise kleiner 38 Gew.%, bevorzugt kleiner 36 Gew.%, besonders bevorzugt kleiner 35 Gew.% auf. Der verbleibende Rest des Bindemittels besteht vorzugsweise aus Wasser.

Das Bindemittel weist einen Feststoffanteil von größer 22 Gew.%, vorzugsweise größer 24 Gew.%, bevorzugt größer 26 Gew.%, besonders bevorzugt größer 28 Gew.%, ganz besonders bevorzugt größer 29 Gew.% und insbesondere bevorzugt größer 29,5 Gew.% auf.

Der Feststoffanteil wird bestimmt, indem die Flüssigkeit vorsichtig abgedampft wird, das Bindemittel somit getrocknet - und anschließend bei 600°C für 1 h in einer Luftatmosphäre erhitzt wird. Das verbleibende oxidische Material wird zur Bestimmung des Feststoffgehalts gewogen.

Unabhängig hiervon ist die Stoffmenge an SiO₂ und M₂O (berechnet als mol%) im Bindemittel kleiner als 16 mol%, vorzugsweise kleiner als 15 mol%, bevorzugt kleiner als 14 mol%, insbesondere bevorzugt kleiner als 13,5 mol%. Weiterhin ist diese Stoffmenge größer als 7 mol%, vorzugsweise größer als 8 mol%, bevorzugt größer als 9 mol%, besonders bevorzugt größer als 10 mol% und insbesondere bevorzugt größer als 10,5 mol%.

Das Bindemittel darf nicht zu dünnflüssig, aber auch nicht zu dickflüssig sein. Die dynamische Viskosität wird mithilfe eines Brookfield-Rotationsviskosimeters gemessen werden. Bei einer Temperatur von 25°C hat das erfindungsgemäße Bindemittel eine Viskosität von kleiner als 25 mPas, vorzugsweise kleiner als 20 mPas, bevorzugt kleiner als 18 mPas und insbesondere bevorzugt kleiner als 16 mPas. Bei einer Temperatur von 25°C hat das Bindemittel eine Viskosität von größer als 1 mPas, vorzugsweise größer als 2 mPas, bevorzugt größer als 3 mPas und insbesondere bevorzugt größer als 4 mPas.

Das erfindungsgemäße Bindemittel sollte eine klare Lösung und möglichst frei von gröberen Partikeln sein, die in ihrer größten Ausdehnung eine Größe zwischen mehreren Mikrometern bis mehreren Millimetern aufweisen und beispielsweise aus Verunreinigungen stammen können. Kommerziell erhältliche Wasserglas-Lösungen weisen diese gröberen Partikel in der Regel auf.

Partikel- bzw. Körnungsgrößen werden mit Hilfe von dynamischer Lichtstreuung gemäß DIN/ISO 13320 (z.B. Horiba LA 950) bestimmt.

Der ermittelte D90-Wert (jeweils auf das Volumen bezogen) gilt hierbei als Maß für die größeren Partikel - er bedeutet, dass 90% der Partikel kleiner sind als der angegebene Wert. Das erfindungsgemäße Wasserglas weist einen D90-Wert (ermittelt durch dynamische Lichtstreuung bzw. Laserdiffraktometrie) von kleiner als 70 µm, vorzugsweise kleiner als 40 µm, bevorzugt kleiner als 30 µm, besonders bevorzugt kleiner als 25 µm und insbesondere bevorzugt kleiner als 20 µm auf.

Unabhängig hiervon weist das erfindungsgemäße Wasserglas einen D100-Wert (jeweils auf das Volumen bezogen) von kleiner als 250 µm, vorzugsweise kleiner als 120 µm, bevorzugt kleiner als 50 µm, weiter bevorzugt kleiner als 40 µm, besonders bevorzugt kleiner als 35 µm und insbesondere bevorzugt kleiner als 30 µm auf.

Oben beschriebene Bindemittel enthaltend Wassergläser lassen sich beispielsweise durch geeignete Filtration erhalten - beispielsweise eignen sich Filter mit einem Siebdurchmesser von 50 µm, vorzugsweise von 25 µm, bevorzugt 10 µm und besonders bevorzugt 5 µm. Bevorzugt ist ein Bindemittel, das überhaupt keine Partikel mit einer Größe von mindestens 1 µm enthält.

In einer Ausführungsform kann das erfindungsgemäße Bindemittel Anteile an Lithium-Ionen aufweisen. Das molare Verhältnis von Li₂O / M₂O kann über weite Bereiche variieren, beispielsweise zwischen 0,01 und 0,3. Vorzugsweise liegt das Verhältnis im Bereich zwischen 0,03 und 0,17, bevorzugt zwischen 0,035 und 0,16 und insbesondere bevorzugt zwischen 0,04 und 0,14.

In einer Ausführungsform kann das erfindungsgemäße Bindemittel Anteile an Kalium-Ionen aufweisen. Das molare Verhältnis von K₂O / M₂O kann über weite Bereiche variieren, beispielsweise zwischen 0,01 und 0,3. Vorzugsweise liegt das Verhältnis im Bereich zwischen 0,01 und 0,17, bevorzugt zwischen 0,02 und 0,16 und insbesondere bevorzugt zwischen 0,03 und 0,14.

Überraschend hat sich gezeigt, dass ein Zusatz von anderen Netzwerkbildnern als Silikat sowohl die Thermostabilität erhöhen als auch die Reaktivität reduzieren kann. Es wird daher ein Netzwerkbildner aus der Gruppe der Phosphate dem Bindemittel zugesetzt und in dem Bindemittel gelöst, insbesondere Alkaliphosphate (z.B. Natriumhexametaphosphat oder Natriumpolyphosphate) haben sich als positiv herausgestellt. Unter den Alkaliphosphaten sind Alkaliorthophosphate wie Trinatriumphosphat (Na₃PO₄) nicht bevorzugt. Bevorzugt sind insbesondere Natriumpolyphosphate und/oder Natriummetaphosphate.

Andere dem Bindemittel alternativ oder zusätzlich zusetzbare Netzwerkbildner sind Borate, insbesondere Alkaliborate, z.B. Di-Natrium-tetraborat-decahydrat. Auch diese sind im Bindemittel gelöst.

Die Mengen der Alkalimetalle, die sich aus den Anteilen der Alkaliborate und/oder Alkaliphosphate an der Gesamtmenge des Bindemittels (inklusive Verdünnungsmittel) ergeben, werden als Oxide berechnet und tragen zur Gesamtstoffmenge (d.h. die Summe der einzelnen Stoffmengen) von Lithium-, Natrium- und Kalium-Oxid in der gesamten wässrigen Lösung bei. Folglich wird - gemäß dieser Festsetzung - durch die Zugabe von Alkaliboraten und/oder Alkaliphosphaten auch das molare Modul SiO₂/M₂O beeinflusst.

Der Gehalt an Boraten im Bindemittel, insbesondere der Gehalt an Alkaliboraten, wird als B₂O₃ berechnet. Das molare Verhältnis von B₂O₃/SiO₂ kann über weite Bereiche variieren, beispielsweise von 0 bis 0,5. Vorzugsweise ist dieses Verhältnis kleiner als 0,3, bevorzugt kleiner als 0,2, besonders bevorzugt kleiner als 0,1, insbesondere bevorzugt kleiner als 0,08 und ganz besonders bevorzugt kleiner als 0,06. Vorzugsweise ist dieses Verhältnis größer gleich 0. In einer weiteren Ausführungsform ist dieses Verhältnis bevorzugt größer als 0,01, insbesondere bevorzugt größer als 0,02. Borate im Sinne der Erfindung sind Bor-Verbindungen in der Oxidationsstufe III die nur an Sauerstoff direkt gebunden sind, d.h. Sauerstoffatome sind die direkten Bindungspartner des Bors in der Verbindung.

Der Gehalt an Phosphaten im Bindemittel, insbesondere der Gehalt an Alkaliphosphaten, wird als P₂O₅ berechnet. Das molare Verhältnis von P₂O₅/SiO₂ kann über weite Bereiche variieren, beispielsweise von 0 bis 0,5. Vorzugsweise ist dieses Verhältnis kleiner als 0,4, bevorzugt kleiner als 0,3, weiter bevorzugt kleiner als 0,25, insbesondere bevorzugt kleiner als 0,2 und ganz besonders bevorzugt kleiner als 0,15. Vorzugsweise ist dieses Verhältnis größer 0, bevorzugt größer als 0,01, insbesondere bevorzugt größer als 0,02.

Phosphate im Sinne der Erfindung sind Phosphor-Verbindungen in der Oxidationsstufe V die nur an Sauerstoff direkt gebunden sind, d.h. Sauerstoffatome sind die direkten Bindungspartner des Phosphors in der Verbindung.

In einer weiteren Ausführungsform kann das Bindemittel auch aluminiumhaltig sein, wobei der Anteil des Aluminiums dann als Al₂O₃ berechnet wird. Üblicherweise beträgt der Anteil des Al₂O₃ dann weniger als 2 Gew.%, bezogen auf die Gesamtmasse des Bindemittels.

In einer bevorzugten Ausführungsform können dem erfindungsgemäßen Bindemittel oberflächenaktive Substanzen zugesetzt sein, um die Oberflächenspannung des Bindemittels zu beeinflussen. Der Anteil dieser oberflächenaktiven Substanzen liegt in der Regel zwischen 0,01 und 4,0 Gew.%, vorzugsweise zwischen 0,1 und 3,0 Gew.%.

Geeignete oberflächenaktive Substanzen im Bindemittel sind beispielsweise in der DE 102007051850 A1 beschrieben, darunter vorzugsweise anionische Tenside, die eine Sulfat- und/oder Sulfonatgruppe tragen. Weitere geeignete oberflächenaktive Substanzen sind beispielsweise Polyacrylat-Salze (z.B. des Natriums - beispielsweise Dispex N40 - Ciba) oder Silikontenside für wässrige Systeme (z.B. Byk 348, Altana). Auch oberflächenaktive Substanzen auf Trisiloxan- oder Glycol (z.B. Polyethylenglycol) - Basis können eingesetzt werden.

Je nach Anwendung und gewünschtem Festigkeitsniveau werden vorzugsweise zwischen 0,5 Gew.% und 7 Gew.% des auf Wasserglas basierenden Bindemittels eingesetzt, bevorzugt zwischen 0,75 Gew.% und 6 Gew.%, besonders bevorzugt zwischen 1 Gew.% und 5,0 Gew.% und insbesondere bevorzugt zwischen 1 Gew.% und 4,0 Gew.%, jeweils bezogen auf den Formgrundstoff. Die Angaben beziehen sich auf die Gesamtmenge des Wasserglasbindemittels, einschließlich des (insbesondere wässrigen) Lösungs- bzw. Verdünnungsmittels und des (etwaigen) Feststoffanteils (zusammen = 100 Gew.%).

In einer bevorzugten Ausführungsform kann die Baustoffmischung einen Anteil eines partikulären amorphen Siliziumdioxids enthalten, um das Festigkeitsniveau der Gießformen zu erhöhen. Eine Steigerung der Festigkeiten der Gießformen, insbesondere die Steigerung der Heißfestigkeiten, kann im automatisierten Fertigungsprozess vorteilhaft sein. Synthetisch hergestelltes amorphes Siliciumdioxid ist besonders bevorzugt.

Die mittlere Partikelgröße (inkl. etwaiger Agglomerate) des amorphen Siliziumdioxids beträgt vorzugsweise weniger als 300 µm, bevorzugt weniger als 200 µm, insbesondere bevorzugt weniger als 100 µm. Der Siebrückstand des partikulären amorphen SiO₂ bei einem Durchgang durch ein Sieb mit 125 µm Maschenweite (120 mesh) beträgt vorzugsweise nicht mehr als 10 Gew.%, besonders bevorzugt nicht mehr als 5 Gew.% und ganz besonders bevorzugt nicht mehr als 2 Gew.%.

Unabhängig hiervon beträgt der Siebrückstand auf einem Sieb mit einer Maschenweite von 63 µm weniger als 10 Gew.-%, vorzugsweise weniger als 8 Gew.%. Die Bestimmung des Siebrückstands erfolgt dabei nach dem in der DIN 66165 (Teil 2) beschriebenen Maschinensiebverfahren, wobei zusätzlich ein Kettenring als Siebhilfe verwendet wird.

Das nach der vorliegenden Erfindung vorzugsweise eingesetzte partikuläre amorphe Siliziumdioxid hat einen Wassergehalt von kleiner 15 Gew.%, insbesondere kleiner 5 Gew.% und besonders bevorzugt von kleiner 1 Gew.%.

Das partikulare amorphe SiO₂ wird als Pulver (einschließend Stäube) eingesetzt.

Als amorphes SiO₂ können sowohl synthetisch hergestellte als auch natürlich vorkommende Kieselsäuren eingesetzt werden. Letztere sind z.B. aus DE 102007045649 bekannt, sind aber nicht bevorzugt, da sie i.d.R. nicht unerhebliche kristalline Anteile enthalten und deshalb als karzinogen eingestuft sind. Unter *synthetisch* wird nicht natürlich vorkommendes amorphes SiO₂ verstanden, d. h. dessen Herstellung eine bewusst durchgeführte chemische Reaktion umfasst, wie sie von einem Menschen veranlasst wird, z.B. die Herstellung von Kieselsolen durch Ionenaustauschprozesse aus Alkalisilikatlösungen, die Ausfällung aus Alkalisilikatlösungen, die Flammhydrolyse von Siliciumtetrachlorid, die Reduktion von Quarzsand mit Koks im Lichtbogenofen bei der Herstellung von Ferrosilicium und Silicium. Das nach den beiden letztgenannten Verfahren hergestellte amorphe SiO₂ wird auch als pyrogenes SiO₂ bezeichnet.

Gelegentlich wird unter synthetischem amorphen Siliziumdioxid nur Fällungskieselsäure (CAS-Nr. 112926-00-8) und flammhydrolytisch hergestelltes SiO₂ (Pyrogenic Silica, Fumed Silica, CAS-Nr. 112945-52-5) verstanden, während das bei der Ferrosilicium- bzw. Siliciumherstellung entstandene Produkt lediglich als amorphes Siliziumdioxid (Silica Fume, Microsilica, CAS-Nr. 69012-64-12) bezeichnet wird. Für die Zwecke der vorliegenden Erfindung wird auch das bei der Ferrosilicium- bzw. Siliciumherstellung entstandene Produkt als amorphes SiO₂ verstanden.

Bevorzugt eingesetzt werden Fällungskieselsäuren und pyrogenes, d.h. flammhydrolytisch oder im Lichtbogen hergestelltes Siliziumdioxid. Insbesondere bevorzugt eingesetzt werden durch thermische Zersetzung von ZrSiO₄ hergestelltes amorphes Siliziumdioxid (beschrieben in der DE 102012020509) sowie durch Oxidation von metallischem Si mittels eines sauerstoffhaltigen Gases hergestelltes SiO₂ (beschrieben in der DE 102012020510). Bevorzugt ist auch Quarzglaspulver (hauptsächlich amorphes Siliziumdioxid), das durch Schmelzen und rasches Wiederabkühlen aus kristallinem Quarz hergestellt wurde, so dass die Partikel kugelförmig und nicht splittrig vorliegen (beschrieben in der DE 102012020511).

Die mittlere Primärpartikelgröße des partikulären amorphen Siliziumdioxids kann zwischen 0,05 µm und 10 µm, insbesondere zwischen 0,1 µm und 5 µm, besonders bevorzugt zwischen 0,1 µm und 2 µm betragen. Die Primärpartikelgröße kann z.B. mit Hilfe von dynamischer Lichtstreuung (z.B. Horiba LA 950) bestimmt sowie durch Rasterelektronenmikroskop-Aufnahmen (REM-Aufnahmen mit z.B. Nova NanoSEM 230 der Firma FEI) überprüft werden. Des Weiteren konnten mit Hilfe der REM-Aufnahmen Details der Primärpartikelform bis in die Größenordnung von 0,01 µm sichtbar gemacht werden. Die Siliziumdioxid-Proben wurden für die REM-Messungen in destilliertem Wasser dispergiert und anschließend auf einem mit Kupferband beklebten Aluminiumhalter aufgebracht, bevor das Wasser verdampft wurde.

Des Weiteren wurde die spezifische Oberfläche des partikulären amorphen Siliziumdioxids mithilfe von Gasadsorptionsmessungen (BET-Verfahren) nach DIN 66131 bestimmt. Die spezifische Oberfläche des partikulärem amorphen SiO₂ liegt zwischen 1 und 200 m²/g, insbesondere zwischen 1 und 50 m²/g, besonders bevorzugt zwischen 1 und 30 m²/g. Ggfs. können die Produkte auch gemischt werden, z.B. um gezielt Mischungen mit bestimmten Partikelgrößenverteilungen zu erhalten.

Je nach Herstellungsart und Produzent kann die Reinheit des amorphen SiO₂ stark variieren. Als geeignet haben sich Typen mit einem Gehalt von mindestens 85 Gew.% Siliziumdioxid erwiesen, bevorzugt von mindestens 90 Gew.% und besonders bevorzugt von mindestens 95 Gew.%.

Je nach Anwendung und gewünschtem Festigkeitsniveau werden zwischen 0,1 Gew.% und 2 Gew.% des partikulären amorphen SiO₂ eingesetzt, vorzugsweise zwischen 0,1 Gew.% und 1,8 Gew.%, besonders bevorzugt zwischen 0,1 Gew.% und 1,5 Gew.%, jeweils bezogen auf den Formgrundstoff.

Das Verhältnis von Wasserglas-basierendem Bindemittel zu partikulärem amorphen Siliziumdioxid kann innerhalb weiter Grenzen variiert werden.

Bezogen auf das Gesamtgewicht des Bindemittels (einschließlich Verdünnungs- bzw. Lösungsmittel) ist das amorphe SiO₂ vorzugsweise in einem Anteil von 1 bis 80 Gew.%, vorzugsweise 2 bis 60 Gew.%, enthalten, besonders bevorzugt von 3 bis 55 Gew.% und insbesondere bevorzugt zwischen 4 bis 50 Gew.%. Oder unabhängig hiervon bezogen auf das Verhältnis Feststoffanteil des wasserglasbasierenden Bindemittels (bezogen auf die Oxide, d.h. Gesamtmasse aus Alkalimetalloxiden M₂O und Siliziumdioxid) zu amorphem SiO₂ von 10 : 1 bis 1 : 1,2 (Gewichtsteile) bevorzugt.

Das amorphe SiO₂ ist dem Feuerfeststoff bzw. der Baustoffmischung vor der Bindemittelzugabe zugegeben.

Das erfindungsgemäße Verfahren ist bei Verwendung von amorphem SiO₂ somit weiterhin durch eines oder mehrere der nachfolgenden Merkmale gekennzeichnet:
(a) Das amorphe Siliziumdioxid wird nur der Baustoffmischung zugesetzt.
(b) Das amorphe Siliziumdioxid weist eine nach BET bestimmte Oberfläche zwischen 1 und 200 m²/g, vorzugsweise größer gleich 1 m²/g und kleiner gleich 30 m²/g, besonders bevorzugt von kleiner gleich 15 m²/g auf.
(c) Das amorphe Siliziumdioxid ist aus der Gruppe bestehend aus: Fällungskieselsäure, flammhydrolytisch oder im Lichtbogen hergestelltem pyrogenen Siliziumdioxid, durch thermische Zersetzung von ZrSiO₄ hergestelltes amorphen Siliziumdioxid, durch Oxidation von metallischem Silizium mittels eines sauerstoffhaltigen Gases hergestelltes Siliziumdioxid, Quarzglaspulver mit kugelförmigen Partikeln, das durch Schmelzen und rasches Wiederabkühlen aus kristallinem Quarz hergestellt wurde, und deren Mischungen ausgewählt und ist vorzugsweise durch thermische Zersetzung von ZrSiO₄ hergestelltes amorphes Siliziumdioxid.
(d) Das amorphe Siliziumdioxid wird vorzugsweise in Mengen von 0,1 bis 2 Gew.%, besonders bevorzugt 0,1 bis 1,5 Gew.%, jeweils bezogen auf den feuerfesten Formgrundstoff eingesetzt.
(e) Das amorphe Siliziumdioxid weist einen Wassergehalt von kleiner 5 Gew.% und besonders bevorzugt kleiner 1 Gew.% auf.
(f) Das amorphe Siliziumdioxid ist partikuläres amorphes Siliziumdioxid, vorzugsweise mit einem mittleren durch dynamische Lichtstreuung bestimmten primären Partikeldurchmesser zwischen 0,05 µm und 10 µm, insbesondere zwischen 0,1 µm und 5 µm und besonders bevorzugt zwischen 0,1 µm und 2 µm.

In einer weiteren Ausführungsform ist der Baustoffmischung vor der Bindemittelzugabe ein anorganischer Härter für Bindemittel auf Wasserglasbasis zugesetzt. Solche anorganischen Härter sind z.B. Phosphate wie beispielsweise Lithopix P26 (ein Aluminiumphosphat der Fa. Zschimmer und Schwarz GmbH & Co KG Chemische Fabriken) oder Fabutit 748 (ein Aluminiumphosphat der Fa. Chemische Fabrik Budenheim KG). Andere anorganische Härter für Bindemittel auf Wasserglasbasis sind beispielsweise Calciumsilikate und deren Hydrate, Calciumaluminate und deren Hydrate, Aluminiumsulfat, Magnesium- und Calciumcarbonat.

Das Verhältnis von Härter zu Bindemittel kann je nach gewünschter Eigenschaft, z.B. Verarbeitungszeit und/oder Ausschalzeit der Baustoffmischungen, variieren. Vorteilhaft liegt der Härteranteil (Gewichtsverhältnis von Härter zu Bindemittel und im Falle von Wasserglas die Gesamtmasse der Silikatlösung oder anderen in Lösungsmitteln aufgenommenen Bindemitteln) bei größer gleich 5 Gew.%, vorzugsweise bei größer gleich 8 Gew.%, insbesondere bevorzugt bei größer gleich 10 Gew.%, jeweils bezogen auf das Bindemittel. Die oberen Grenzen liegen bei kleiner gleich 25 Gew.% bezogen auf das Bindemitttel, vorzugsweise bei kleiner gleich 20 Gew.%, besonders bevorzugt bei kleiner gleich 15 Gew.%.

Unabhängig hiervon werden zwischen 0,05 Gew.% und 2 Gew.% des anorganischen Härters eingesetzt, vorzugsweise zwischen 0,1 Gew.% und 1 Gew.%, besonders bevorzugt zwischen 0,1 Gew.% und 0,6 Gew.%, jeweils bezogen auf den Formgrundstoff.

Sobald die Festigkeiten es gestatten, kann die ungebundene Baustoffmischung im Anschluss von der Gießform entfernt und die Gießform der weiteren Behandlung, z.B. der Vorbereitung zum Metallguss zugeführt werden. Das Entfernen der ungebundenen von der gebundenen Baustoffmischung gelingt beispielsweise durch einen Auslauf, sodass die ungebundene Baustoffmischung herausrieseln kann.
Die gebundene Baustoffmischung (Gießform) kann beispielsweise mithilfe von Druckluft oder durch Pinseln von Resten der ungebundenen Baustoffmischung befreit werden.

Die ungebundene Baustoffmischung kann für einen neuen Druckvorgang wiederverwendet werden.

Das Bedrucken erfolgt z.B. mit einem eine Vielzahl von Düsen aufweisenden Druckkopf, wobei die Düsen vorzugsweise einzeln selektiv ansteuerbar sind. Nach einer weiteren Ausgestaltung wird der Druckkopf zumindest in einer Ebenen von einem Computer gesteuert bewegt und die Düsen tragen das flüssige Bindemittel schichtweise auf. Der Druckkopf kann z.B. ein Drop-on-Demand Druckkopf mit Bubble-Jet oder vorzugsweise Piezo-Technik sein.

Die vorliegende Erfindung betrifft weiterhin die folgenden Gegenstände:
1. Verfahren zum schichtweisen Aufbau von Körpern umfassend zumindest die folgenden Schritte:
   a) Bereitstellen eines feuerfesten Formgrundstoffs als Bestandteil einer Baustoffmischung;
   b) Ausbreiten einer dünnen Schicht der Baustoffmischung mit einer Schichtdicke von 0,05 mm bis 3 mm, bevorzugt 0,1 mm bis 2 mm und besonders bevorzugt 0,1 mm bis 1 mm;
   c) Bedrucken ausgewählter Bereiche der dünnen Schicht mit einem Bindemittel umfassend
      - Wasserglas in Form einer wässrigen Alkalisilikat-Lösung und
      - zumindest ein Phosphat oder zumindest ein Borat oder Phosphat und Borat; und
   d) mehrfaches Wiederholen der Schritte b) und c).
2. Verfahren nach Gegenstand 1 umfassend weiterhin den Schritt der Aushärtung der bedruckten Bereiche, insbesondere durch Temperaturerhöhung, vorzugsweise bewirkt durch Mikrowellen und/oder Infrarotlicht.
3. Verfahren nach Gegenstand 2 wobei die Aushärtung der bedruckten Bereiche jeweils nach Aufbau von 1 bis 10 bedruckten Schichten der Baustoffmischung, vorzugsweise 3 bis 8 bedruckten Schichten erfolgt.
4. Verfahren nach zumindest einem der vorhergehenden Gegenstände umfassend weiterhin die folgenden Schritte:
   i) Härtung des Körpers nach Beendigung des schichtweisen Aufbaus in einem Ofen oder mittels Mikrowelle und nachfolgendes
   ii) Entfernen der ungebundenen Baustoffmischung von der zumindest teilgehärteten Gießform.
5. Verfahren nach zumindest einem der vorhergehenden Gegenstände , wobei der feuerfeste Formgrundstoff Quarz-, Zirkon- oder Chromerzsand, Olivin, Vermiculit, Bauxit, Schamotte, Glasperlen, Glasgranulat, Aluminiumsilikatmikrohohlkugeln und deren Mischungen umfasst und vorzugsweise zu mehr als 50 Gew.% aus Quarzsand bezogen auf den feuerfesten Formgrundstoff besteht.
6. Verfahren nach zumindest einem der vorhergehenden Gegenstände, wobei größer 80 Gew.%, vorzugsweise größer 90 Gew.%, und besonders bevorzugt größer 95 Gew.%, der Baustoffmischung feuerfester Formgrundstoff ist.
7. Verfahren nach zumindest einem der vorhergehenden Gegenstände, wobei der feuerfeste Formgrundstoff mittlere Körnungsdurchmesser von 50 µm bis 600 µm, bevorzugt zwischen 80 µm und 300 µm aufweist, bestimmt durch Siebanalyse.
8. Verfahren nach zumindest einem der vorhergehenden Gegenstände, wobei das Wasserglas, einschließlich Lösungs-/Verdünnungsmittel in einer Menge zwischen 0,5 Gew.% und 7 Gew.%, bevorzugt zwischen 0,75 Gew.% und 6 Gew.% und besonders bevorzugt zwischen 1 Gew.% und 5,0 Gew.%, bezogen auf den Formgrundstoff eingesetzt wird.
9. Verfahren nach zumindest einem der vorhergehenden Gegenstände, wobei der Baustoffmischung weiterhin ein anorganischer Härter für Bindemittel auf Wasserglasbasis zugesetzt ist und der anorganische Härter vorzugsweise ein Phosphat ist.
10. Verfahren nach Gegenstand 9, wobei der Anteil des Härters relativ zum Bindemittel bei größer gleich 5 bis kleiner 25 Gew.%, vorzugsweise bei größer gleich 8 bis kleiner 20 Gew.%, insbesondere bevorzugt bei größer gleich 10 bis kleiner 15 Gew.% liegt.
11. Verfahren nach Gegenstand 9, wobei zwischen 0,05 Gew.% und 2 Gew.% des anorganischen Härters eingesetzt, vorzugsweise zwischen 0,1 Gew.% und 1 Gew.%, besonders bevorzugt zwischen 0,1 Gew.% und 0,6 Gew.%, jeweils bezogen auf den Formgrundstoff.
12. Verfahren nach zumindest einem der vorhergehenden Gegenstände, wobei das Bedrucken mit einem eine Vielzahl von Düsen aufweisenden Druckkopf erfolgt, wobei die Düsen vorzugsweise einzeln selektiv ansteuerbar sind.
13. Verfahren nach Gegenstand 12, wobei der Druckkopf zumindest in einer Ebene von einem Computer gesteuert bewegbar ist und die Düsen das flüssige Bindemittel schichtweise auftragen.
14. Verfahren nach Gegenstand 12 oder 13, wobei der Druckkopf ein Drop-on-Demand Druckkopf mit Bubble-Jet oder Piezo-Technik ist.
15. Verfahren nach zumindest einem der vorhergehenden Gegenstände, wobei das zumindest eine Phosphat zumindest bei 25°C wasserlöslich ist und vorzugsweise ein Alkaliphosphat ist, insbesondere bevorzugt Natriumpolyphosphat oder Natriummetaphosphat oder beides.
16. Verfahren nach zumindest einem der vorhergehenden Gegenstände, wobei das Bindemittel Phosphate enthält, vorzugsweise in einem molaren Verhältnis P₂O₅/SiO₂ (berechnet als P₂O₅ und relativ zum SiO₂ im Bindemittel) von größer als 0,01 und kleiner als 0,5 aufweist.
17. Verfahren nach zumindest einem der vorhergehenden Gegenstände, wobei das Bindemittel Borate enthält und vorzugsweise das molare Verhältnis B₂O₃/SiO₂ (berechnet als B₂O₃ und SiO₂ im Bindemittel) von 0,01 bis 0,5 beträgt.
18. Verfahren nach zumindest einem der vorhergehenden Gegenstände, wobei das zumindest eine Borat zumindest bei 25°C wasserlöslich ist und vorzugsweise ein Alkaliborat ist, insbesondere bevorzugt Di-Natrium-tetraborat-decahydrat.
19. Form oder Kern herstellbar nach zumindest einem der Gegenstände 1 bis 18 für den Metallguss, insbesondere den Eisen-, Stahl-, Kupfer- oder Aluminium-Guss.
20. Bindemittel aufweisend
   - Wasserglas mit einem molaren Verhältnis von Na₂O / M₂O von größer als 0,4, bevorzugt größer als 0,5 und weiter bevorzugt größer als 0,6 und insbesondere bevorzugt größer als 0,7 und einem molaren Modul SiO₂/M₂O von größer 1,4 bis kleiner 2,8, vorzugsweise größer 1,6 bis kleiner 2,6, bevorzugt größer 1,8 bis kleiner 2,5 und weiter bevorzugt größer 1,9 und kleiner 2,4,
      wobei jeweils M₂O für die Summe der molare Stoffmengen von Lithium-, Natrium- und Kalium berechnet als Oxid steht, bezogen auf die im Bindemittel enthaltenen amorphen Alkalisilikate, Alkalioxide, Alkalihydroxide, Alkaliphosphate und/oder Alkaliborate; und
   - wobei das Bindemittel eine dynamische Viskosität bei einer Temperatur von 25°C von kleiner als 25 mPas ausweist;

   - etwaige partikuläre Bestandteile im Bindemittel einen D90-Wert von kleiner als 70 µm aufweisen; und das Bindemittel
      - zumindest ein Phosphat oder zumindest ein Borat oder Phosphat und Borat enthält.
21. Bindemittel nach Gegenstand 20, wobei das Bindemittel einen Feststoffanteil von größer 22 bis kleiner 40 Gew.%, vorzugsweise größer 24 bis kleiner 38 Gew.%, bevorzugt größer 26 bis kleiner 36 Gew.%, besonders bevorzugt größer 28 bis kleiner 35 Gew.% aufweist.
22. Bindemittel nach Gegenstand 20 oder 21, wobei etwaige Partikel im Bindemittel
   - einen D90-Wert von kleiner als 40 µm, bevorzugt kleiner als 30 µm, besonders bevorzugt kleiner als 25 µm und insbesondere bevorzugt kleiner als 20 µm aufweisen und /oder
   - einen D100-Wert von kleiner als 250 µm, vorzugsweise kleiner als 120 µm, bevorzugt kleiner als 50 µm, weiter bevorzugt kleiner als 40 µm, besonders bevorzugt kleiner als 35 µm und insbesondere bevorzugt kleiner als 30 µm aufweist.
23. Bindemittel nach zumindest einem der Gegenstände 20 bis 22, wobei das zumindest eine Phosphat zumindest bei 25°C wasserlöslich ist, vorzugsweise ein Alkaliphosphat ist, insbesondere bevorzugt Natriumpolyphosphat oder Natriummetaphosphat oder beides.
24. Bindemittel nach zumindest einem der Gegenstände 20 bis 23, wobei das Bindemittel Phosphate enthält, vorzugsweise in einem molare Verhältnis P₂O₅/SiO₂ (berechnet als P₂O₅ und relativ zum SiO₂ im Bindemittel) von größer als 0,01 und kleiner als 0,5 aufweist.
25. Bindemittel nach zumindest einem der Gegenstände 20 bis 24, wobei das Bindemittel Borate enthält und vorzugsweise das molare Verhältnis B₂O₃/SiO₂ (berechnet als B₂O₃ und SiO₂ im Bindemittel) von 0,01 bis 0,5 beträgt.
26. Bindemittel nach zumindest einem der Gegenstände 20 bis 25, wobei das zumindest eine Borat zumindest bei 25°C wasserlöslich ist und vorzugsweise ein Alkaliborat ist, insbesondere bevorzugt Di-Natrium-tetraborat-decahydrat.
27. Bindemittel nach zumindest einem der Gegenstände 20 bis 26, wobei das Bindemittel weiterhin oberflächenaktive Substanzen enthält, vorzugsweise Tenside, insbesondere zwischen 0,01 und 4,0 Gew.%, vorzugsweise zwischen 0,1 und 3,0 Gew.%.
28. Verfahren nach zumindest einem der Gegenstände 1 bis 19, wobei das Bindemittel durch einen der Gegenstände 20 bis 27 weiter definiert ist.

## Patentansprüche

1. Verfahren zum schichtweisen Aufbau von Körpern umfassend zumindest die folgenden Schritte:
a) Bereitstellen eines feuerfesten Formgrundstoffs als Bestandteil einer Baustoffmischung;
b) Ausbreiten einer dünnen Schicht der Baustoffmischung mit einer Schichtdicke von 0,05 mm bis 3 mm, bevorzugt 0,1 mm bis 2 mm und besonders bevorzugt 0,1 mm bis 1 mm;
c) Bedrucken ausgewählter Bereiche der dünnen Schicht mit einem Bindemittel umfassend
- Wasserglas in Form einer wässrigen Alkalisilikat-Lösung und
- zumindest ein Phosphat oder zumindest ein Borat oder Phosphat und Borat; und
d) mehrfaches Wiederholen der Schritte b) und c),
wobei das Wasserglas, einschließlich Lösungs-/Verdünnungsmittel in einer Menge zwischen 0,5 Gew.% und 7 Gew.% bezogen auf den Formgrundstoff eingesetzt wird.

2. Verfahren nach Anspruch 1 umfassend weiterhin den Schritt der Aushärtung der bedruckten Bereiche, insbesondere durch Temperaturerhöhung, vorzugsweise bewirkt durch Mikrowellen und/oder Infrarotlicht, wobei vorzugsweise die Aushärtung der bedruckten Bereiche jeweils nach Aufbau von 1 bis 10 bedruckten Schichten der Baustoffmischung, weiter bevorzugt 3 bis 8 bedruckten Schichten erfolgt.

3. Verfahren nach zumindest einem der vorhergehenden Ansprüche umfassend weiterhin die folgenden Schritte:
i) Härtung des Körpers nach Beendigung des schichtweisen Aufbaus in einem Ofen oder mittels Mikrowelle und nachfolgendes
ii) Entfernen der ungebundenen Baustoffmischung von der zumindest teilgehärteten Gießform.

4. Verfahren nach zumindest einem der vorhergehenden Ansprüche, wobei der feuerfeste Formgrundstoff Quarz-, Zirkon- oder Chromerzsand, Olivin, Vermiculit, Bauxit, Schamotte, Glasperlen, Glasgranulat, Aluminiumsilikatmikrohohlkugeln und deren Mischungen umfasst und vorzugsweise zu mehr als 50 Gew.% aus Quarzsand bezogen auf den feuerfesten Formgrundstoff besteht, wobei vorzugsweise größer 80 Gew.%, weiter vorzugsweise größer 90 Gew.%, und besonders bevorzugt größer 95 Gew.%, der Baustoffmischung feuerfester Formgrundstoff ist, und/oder wobei der feuerfeste Formgrundstoff mittlere Körnungsdurchmesser von 50 µm bis 600 µm, bevorzugt zwischen 80 µm und 300 µm aufweist, bestimmt durch Siebanalyse.

5. Verfahren nach zumindest einem der vorhergehenden Ansprüche, wobei das Wasserglas, einschließlich Lösungs-/Verdünnungsmittel in einer Menge zwischen 0,75 Gew.% und 6 Gew.% und besonders bevorzugt zwischen 1 Gew.% und 5,0 Gew.%, bezogen auf den Formgrundstoff eingesetzt wird.

6. Verfahren nach zumindest einem der vorhergehenden Ansprüche, wobei der Baustoffmischung weiterhin ein anorganischer Härter für Bindemittel auf Wasserglasbasis zugesetzt ist und der anorganische Härter vorzugsweise ein Phosphat ist, wobei vorzugsweise der Anteil des Härters relativ zum Bindemittel bei größer gleich 5 bis kleiner 25 Gew.%, weiter bevorzugt bei größer gleich 8 bis kleiner 20 Gew.%, insbesondere bevorzugt bei größer gleich 10 bis kleiner 15 Gew.% liegt, oder wobei bevorzugt zwischen 0,05 Gew.% und 2 Gew.% des anorganischen Härters eingesetzt, weiter vorzugsweise zwischen 0,1 Gew.% und 1 Gew.%, besonders bevorzugt zwischen 0,1 Gew.% und 0,6 Gew.%, jeweils bezogen auf den Formgrundstoff.

7. Verfahren nach zumindest einem der vorhergehenden Ansprüche, wobei das Bedrucken mit einem eine Vielzahl von Düsen aufweisenden Druckkopf erfolgt, wobei die Düsen vorzugsweise einzeln selektiv ansteuerbar sind, wobei vorzugsweise der Druckkopf zumindest in einer Ebene von einem Computer gesteuert bewegbar ist und die Düsen das flüssige Bindemittel schichtweise auftragen, wobei weiter bevorzugt der Druckkopf ein Drop-on-Demand Druckkopf mit Bubble-Jet oder Piezo-Technik ist.

8. Verfahren nach zumindest einem der vorhergehenden Ansprüche, wobei das Bindemittel Phosphate enthält, vorzugsweise in einem molaren Verhältnis P₂O₅/SiO₂ (berechnet als P₂O₅ und relativ zum SiO₂ im Bindemittel) von größer als 0,01 und kleiner als 0,5 aufweist, wobei vorzugsweise das zumindest eine Phosphat zumindest bei 25°C wasserlöslich ist und weiter vorzugsweise ein Alkaliphosphat ist, insbesondere bevorzugt Natriumpolyphosphat oder Natriummetaphosphat oder beides, und/oder wobei das Bindemittel Borate enthält und vorzugsweise das molare Verhältnis B₂O₃/SiO₂ (berechnet als B₂O₃ und SiO₂ im Bindemittel) von 0,01 bis 0,5 beträgt, wobei vorzugsweise das zumindest eine Borat zumindest bei 25°C wasserlöslich ist und weiter vorzugsweise ein Alkaliborat ist, insbesondere bevorzugt Di-Natrium-tetraborat-decahydrat.

9. Form oder Kern herstellbar nach zumindest einem der Ansprüche 1 bis 8 für den Metallguss, insbesondere den Eisen-, Stahl-, Kupfer- oder Aluminium-Guss.

10. Bindemittel aufweisend
- Wasserglas mit einem molaren Verhältnis von Na₂O / M₂O von größer als 0,4, bevorzugt größer als 0,5 und weiter bevorzugt größer als 0,6 und insbesondere bevorzugt größer als 0,7 und einem molaren Modul SiO₂/M₂O von größer 1,4 bis kleiner 2,8, vorzugsweise größer 1,6 bis kleiner 2,6, bevorzugt größer 1,8 bis kleiner 2,5 und weiter bevorzugt größer 1,9 und kleiner 2,4,
wobei jeweils M₂O für die Summe der molare Stoffmengen von Lithium-, Natrium- und Kalium berechnet als Oxid steht, bezogen auf die im Bindemittel enthaltenen amorphen Alkalisilikate, Alkalioxide, Alkalihydroxide, Alkaliphosphate und/oder Alkaliborate; und
- wobei das Bindemittel eine dynamische Viskosität bei einer Temperatur von 25°C von kleiner als 25 mPas ausweist;
- etwaige partikuläre Bestandteile im Bindemittel einen D90-Wert von kleiner als 70 µm aufweisen; und das Bindemittel
- zumindest ein Phosphat oder zumindest ein Borat oder Phosphat und Borat enthält.

11. Bindemittel nach Anspruch 10, wobei das Bindemittel einen Feststoffanteil von größer 22 bis kleiner 40 Gew.%, vorzugsweise größer 24 bis kleiner 38 Gew.%, bevorzugt größer 26 bis kleiner 36 Gew.%, besonders bevorzugt größer 28 bis kleiner 35 Gew.% aufweist, wobei vorzugsweise etwaige Partikel im Bindemittel
- einen D90-Wert von kleiner als 40 µm, bevorzugt kleiner als 30 µm, besonders bevorzugt kleiner als 25 µm und insbesondere bevorzugt kleiner als 20 µm aufweisen und /oder
- einen D100-Wert von kleiner als 250 µm, vorzugsweise kleiner als 120 µm, bevorzugt kleiner als 50 µm, weiter bevorzugt kleiner als 40 µm, besonders bevorzugt kleiner als 35 µm und insbesondere bevorzugt kleiner als 30 µm aufweist.

12. Bindemittel nach zumindest einem der Ansprüche 10 oder 11, wobei das Bindemittel Phosphate enthält, vorzugsweise in einem molare Verhältnis P₂O₅/SiO₂ (berechnet als P₂O₅ und relativ zum SiO₂ im Bindemittel) von größer als 0,01 und kleiner als 0,5, wobei weiter bevorzugt das zumindest eine Phosphat zumindest bei 25°C wasserlöslich ist, vorzugsweise ein Alkaliphosphat ist, insbesondere bevorzugt Natriumpolyphosphat oder Natriummetaphosphat oder beides, und/oder wobei das Bindemittel Borate enthält und vorzugsweise das molare Verhältnis B₂O₃/SiO₂ (berechnet als B₂O₃ und SiO₂ im Bindemittel) von 0,01 bis 0,5 beträgt, wobei vorzugsweise das zumindest eine Borat zumindest bei 25°C wasserlöslich ist und vorzugsweise ein Alkaliborat ist, insbesondere bevorzugt Di-Natrium-tetraborat-decahydrat.

13. Bindemittel nach zumindest einem der Ansprüche 10 bis 12, wobei das Bindemittel weiterhin oberflächenaktive Substanzen enthält, vorzugsweise Tenside, insbesondere zwischen 0,01 und 4,0 Gew.%, vorzugsweise zwischen 0,1 und 3,0 Gew.%.

14. Verfahren nach zumindest einem der vorhergehenden Ansprüche 1 bis 8, wobei das Bindemittel durch einen der Ansprüche 10 bis 13 weiter definiert ist.

15. Verfahren nach zumindest einem der vorhergehenden Ansprüche 1 bis 8 oder 14, wobei die Baustoffmischung partikuläres, amorphes Siliziumdioxid umfasst, vorzugsweise synthetisch hergestelltes amorphes Siliziumdioxid.
